# EUROPÄISCHE PATENTSCHRIFT

(11) **EP 1 129 303 B1**
(45) Veröffentlichungstag und Bekanntmachung des Hinweises auf die Patenterteilung: **14.05.2008**
(21) Anmeldenummer: 99964363.8
(22) Anmeldetag: 23.11.1999
(51) Int. Cl.: F16D 48/00

(54) **GETRIEBEAGGREGAT UND ELEKTRISCHE MASCHINE FÜR EIN KRAFTFAHRZEUG**
GEAR BOX UNIT FOR A MOTOR VEHICLE
ENSEMBLE TRANSMISSION POUR UN VEHICULE AUTOMOBILE

(30) Priorität: 03.12.1998 DE 19855790
(43) Veröffentlichungstag der Anmeldung: 05.09.2001
(73) Patentinhaber: ROBERT BOSCH GMBH, 70442 Stuttgart (DE)
(72) Erfinder: GROB, Ferdinand, D-74354 Besigheim (DE); LOEFFLER, Juergen, D-71364 Winnenden (DE); BOLZ, Martin-Peter, D-71720 Oberstenfeld (DE); HUELSER, Holger, D-70329 Stuttgart (DE)
(86) Internationale Anmeldenummer: PCT/DE1999/003714
(87) Internationale Veröffentlichungsnummer: WO 2000/032957

(56) Entgegenhaltungen:
- EP-A- 0 391 386
- EP-A- 0 930 193
- DE-A- 19 745 997
- DE-C- 4 335 771
- US-A- 4 862 009
- PATENT ABSTRACTS OF JAPAN vol. 012, no. 428 (M-762), 11. November 1988 (1988-11-11) & JP 63 162957 A (HINO MOTORS LTD), 6. Juli 1988 (1988-07-06)

## Beschreibung

Die vorliegende Erfindung betrifft ein Getriebeaggregat für ein Kraftfahrzeug mit einer die Funktionen sowohl eines Starters für die Brennkraftmaschine als auch eines Generators erfüllenden elektrischen Maschine. Genauer gesagt betrifft die Erfindung ein Getriebeaggregat für ein Kraftfahrzeug mit einem Antriebsstrang, der zum Ankoppeln einerseits an eine Brennkraftmaschine und andererseits an Räder des Kraftfahrzeugs vorgesehen ist, einer elektrischen Maschine und einem Getriebe, das konstruiert ist zur Drehmomentübertragung von der elektrischen Maschine auf den Antriebsstrang und umgekehrt.

### Stand der Technik

Derartige Getriebeaggregate sind bekannt, haben sich aber trotz der Vorteile, wie etwa Gewichts-, Platz- und Kostenersparnis, die mit dem Verzicht auf eine elektrische Maschine verbunden sind, noch nicht allgemein durchgesetzt.

Heute sind in Kraftfahrzeugen üblicherweise immer noch getrennte Starter und Generatoren verbaut. Die Starter werden über ein Schieberad nur bei Bedarf eingespurt, dadurch hat ihr Trägheitsmoment keinen Einfluß auf die Dynamik des Antriebsstrangs. Die heutigen Generatoren sind üblicherweise über Riemenscheiben mit der Kurbelwelle der Brennkraftmaschine verbunden, ihre Drehzahl folgt deshalb eng der der Kurbelwelle. Dies hat zur Folge, daß bei jedem Abbremsen der Brennkraftmaschine Drehmoment vom Generator auf den Antriebsstrang rückübertragen wird, der Generator also unnötigerweise mit abgebremst wird. Auf diese Weise geht bei jeder Bremsung Energie ungenutzt verloren, außerdem erhöht der starr gekoppelt mitlaufende Generator das aufzubringende Bremsmoment, was ebenfalls unerwünscht ist.

Um dieses Problem zu lösen, sind Brennkraftmaschine-Generator-Aggregate entwickelt worden, bei denen sogenannte Freilaufriemenscheiben zum Einsatz kommen. Diese Freilaufriemenscheiben koppeln den Generator ab, wenn die Drehzahl der Generatorwelle (auch nur kurzfristig) über derjenigen liegt, die der Kurbelwellendrehzahl der Brennkraftmaschine zum gleichen Zeitpunkt entspricht.

Diese Freilaufriemenscheiben erlauben deshalb eine Drehmomentübertragung nur von der Brennkraftmaschine zum Generator, nicht aber umgekehrt. Sie sind deshalb für eine elektrische Maschine, die sowohl als Starter als auch als Generator dienen soll, ungeeignet.

Die gattungsbildende europäische Patentanmeldung E 0 391 386 beschreibt eine Vorrichtung, die eine elektrische Maschine aufweist, die sowohl als Starter als auch als Generator in Verbindung mit einer Brennkraftmaschine verwendbar ist. Die elektrische Maschine ist über ein Getriebe mit der Brennkraftmaschine wirkverbunden, das einen unidirektionalen Betriebszustand ermöglicht, der eine Drehmomentenübertragung nur von der elektrischen Maschine zur Brennkraftmaschine zulässt. Ferner ist ein weiterer Betriebszustand möglich, der eine Drehmomentenübertragung sowohl von der elektrischen Maschine zur Brennkraftmaschine als auch in Gegenrichtung zulässt.

### Vorteile der Erfindung

Durch die in Anspruch 1 definierte Erfindung wird ein Getriebeaggregat für ein Kraftfahrzeug geschaffen, das es ermöglicht, die Funktionen des Starters und des Generators in einer einzigen elektrischen Maschine zu vereinigen, und dabei dennoch die Vorteile hinsichtlich effektiver Bremsbarkeit und Vermeidung von Energieverlusten liefert, die bei herkömmlichen, an eine Brennkraftmaschine gekoppelten Generatoren durch die bekannten Freilaufriemenscheiben erzielbar sind. Es ist eine Steuerschaltung vorgesehen, die in Abhängigkeit von einer erfaßten Verzögerung des Kraftfahrzeugs das Getriebe ohne weiteres menschliches Zutun in den Leerlauf-Schaltzustand versetzt. Zu diesem Zweck überwacht die Steuerschaltung vorteilhafterweise die Drehzahl des Antriebsstrangs. Dies kann direkt oder mittel-bar erfolgen, zum Beispiel durch Überwachen der Drehzahlen der Räder des Kraftfahrzeugs. Zu diesem Zweck kann die Steuerschaltung mit einem ABS-Steuergerät zusammenwirken.

Das Getriebe eines solchen Aggregats hat zweckmäßigerweise zwei Arbeits-Schaltzustände, einen für die Drehmomentübertragung über den Antriebsstrang zur elektrischen Maschine und einen für die Übertragung in Gegenrichtung, die sich in ihrem Übersetzungsverhältnis unterscheiden.

Immer wenn auf diese Weise eine Überschreitung einer vorgegebenen Verzögerung des Kraftfahrzeugs erfaßt wird, versetzt die Steuerschaltung das Getriebe in den Leerlauf-Schaltzustand. Dadurch wird die elektrische Maschine vom Antriebsstrang entkoppelt und muß dessen Abbremsung nicht folgen. Stattdessen kann in den rotierenden Teilen der elektrischen Maschine gespeicherte kinetische Energie weiterhin zur Stromerzeugung eingesetzt werden.

Die Steuerschaltung überwacht ferner zweckmäßigerweise auch die Drehzahl der elektrischen Maschine und schaltet das Getriebe aus dem Leerlauf-Schaltzustand in einen Arbeits-Schaltzustand zurück, wenn diese Drehzahl unter einen Grenzwert abfällt. Zur Bestimmung dieser Drehzahl kann ein Signal eines Frequenzumrichters herangezogen werden, der üblicherweise an die elektrische Maschine eines Getriebeaggregats der eingangs genannten Art angeschlossen ist, um den von der elektrischen Maschine erzeugten Strom gleichzurichten und durch eine Fahrzeugbatterie speicherbar zu machen.

Der Grenzwert, unterhalb von dem die Steuerschaltung das Getriebe in den Arbeits-Schaltzustand zurückschaltet, wird vorteilhafterweise dynamisch und proportional zur ermittelten Drehzahl der antriebsstrangseitigen Welle des Getriebes festgelegt. Dabei bleibt der Leerlauf-Schaltzustand solange erhalten, wie die elektrische Maschine schneller rotiert, als unter Berücksichtigung des Übersetzungsverhältnisses des Arbeitszustands der Drehzahl der antriebsstrangseitigen Welle des Getriebes entspricht. Erst wenn die Drehzahl der elektrischen Maschine unter diesen Wert abgefallen ist, sei es, weil sie durch Erzeugung von elektrischer Leistung abgebremst wird, oder weil das Fahrzeug erneut beschleunigt, wird in den Arbeitszustand zurückgeschaltet. So ist eine unerwünschte Drehmomentübertragung von der elektrischen Maschine auf den Antriebsstrang ausgeschlossen.

Weitere Merkmale und Vorteile der Erfindung ergeben sich aus der nachfolgenden Beschreibung eines Ausführungsbeispiels.

### Figuren

Es zeigen:
Figur 1 ein Blockdiagramm eines erfindungsgemäßen Getriebeaggregats mit seinen diversen funktionellen Elementen und Signal- und Drehmomentflüssen zwischen ihnen; und
Figur 2 ein Flußdiagramm eines Verfahrens zum Betreiben des Getriebeaggregats aus Figur 1.

### Beschreibung des Ausführungsbeispiels

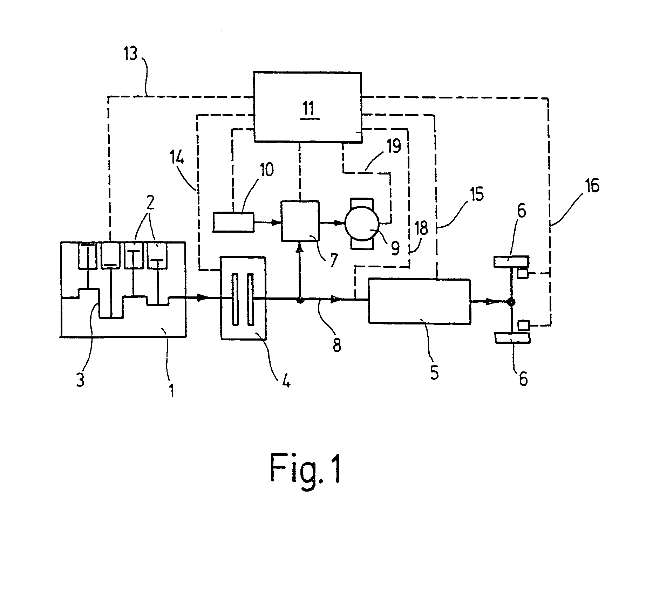

Figur 1 zeigt als stark schematisiertes Blockdiagramm eine Brennkraftmaschine 1 mit mehreren an einer Kurbelwelle 3 angreifenden Zylindern 2, die über einen Antriebsstrang Räder 6 eines Kraftfahrzeugs antreibt. Der Antriebsstrang umfaßt hier in bekannter Weise eine Hauptkupplung 4 und ein Fahrzeuggetriebe 5, an dem unterschiedliche Gänge des Kraftfahrzeugs einstellbar sind, sowie eine diese zwei funktionellen Elemente verbindende Welle 8. Der Aufbau eines solchen Antriebsstrangs ist hinlänglich bekannt und braucht hier nicht im Detail beschrieben zu werden.

Ein Getriebe 7 hat jeweils eine an die Antriebswelle 8 des Fahrzeuggetriebes 5 gekoppelte und eine an eine elektrische Maschine 9 gekoppelte Welle. Ein Aktor 10 regelt den Schaltzustand des Getriebes 7 in Abhängigkeit von einem von einer Steuerschaltung 11 erhaltenen Steuersignal. Der Schaltzustand des Getriebes 7 kann ein Leerlaufzustand, in dem keinerlei Drehmomentübertragung zwischen dem Antriebsstrang und der elektrischen Maschine 9 stattfindet, sowie einer von zwei Arbeitszuständen sein, die sich in ihrer Übersetzung unterscheiden, und von denen einer dem Betrieb der elektrischen Maschine als Generator und der andere dem Betrieb als Starter für die Brennkraftmaschine 1 entspricht. Ein geeigneter Wert für die Übersetzungsverhältnisse sind zum Beispiel 1:3 und 1:18, das heißt im ersten Arbeits-Schaltzustand im Generatorbetrieb wird die elektrische Maschine 9 von der Brennkraftmaschine 1 angetrieben und führt drei Umdrehungen für eine Umdrehung der Antriebswelle 8 aus, wohingegen im zweiten Arbeits-Schaltzustand die elektrische Maschine 9 mit 18 Umdrehungen auf eine Umdrehung der Antriebswelle 8 eingesetzt wird, um die Brennkraftmaschine 1 anzulassen. Das Getriebe 7 kann ein an sich bekanntes Schaltgetriebe mit einer Kupplung, ein Planetengetriebe oder dergleichen sein.

Die Steuerschaltung 11 empfängt Signale von einer Vielzahl der in der Figur dargestellten funktionellen Elemente und sendet Steuersignale an diese. Die Leitungen, auf denen diese Signale empfangen beziehungsweise gesendet werden, sind als gestrichelte Pfeile dargestellt, im Gegensatz zu den durchgezogenen Pfeilen wie etwa dem der Antriebswelle 8, die eine Übertragung einer mechanischen Kraft beziehungsweise eines Drehmoments andeuten.

So empfängt die Steuerschaltung beispielsweise auf einer Leitung 13 die Motordrehzahl beziehungsweise Drehzahl der Kurbelwelle 3, n_mot, auf einer Leitung 14 den Zustand auf oder zu der Hauptkopplung 4, auf einer Leitung 15 ein Signal, das den eingelegten Gang g_ist anzeigt, auf einer Leitung 16 Drehzahlen n_rad der Räder 6, auf einer Leitung 17 den aktuellen Schaltzustand des Getriebes 7, auf einer Leitung 18 die Eingangsdrehzahl des Getriebes 5, die hier gleich der Drehzahl der Antriebswelle 8 ist, und auf 19 die Drehzahl n_sg der Welle der elektrischen Maschine 9. Diese Drehzahl n_sg wird zweckmäßigerweise aus der Frequenz der von der elektrischen Maschine 9 erzeugten Wechselspannung ermittelt, wobei eine Schaltung zur Erfassung dieser Drehzahl insbesondere in einem Frequenzumrichter der elektrischen Maschine enthalten sein kann. Über eine Leitung 20 werden Befehle für den Aktor 10 des Getriebes 7 gegeben.

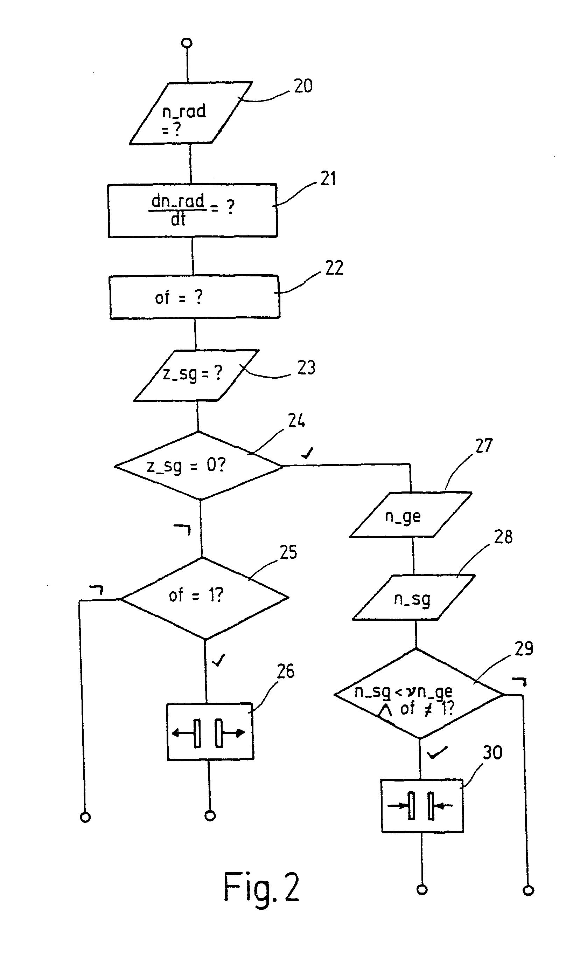

Figur 2 zeigt ein Flußdiagramm eines von der Steuerschaltung 11 ausgeführten Verfahrens. Die Steuerschaltung 11 wiederholt dieses Verfahren zyklisch, solange die Brennkraftmaschine 1 arbeitet. Dabei bestimmt sie zunächst in Schritt 20 die Drehgeschwindigkeit n_rad eines Rades oder der Räder des Kraftfahrzeugs, wobei gegebenenfalls ein Mittelwert über mehrere Räder bestimmt wird. Zur Bestimmung der Raddrehzahlen können Drehzahlsensoren eines Antiblockiersystemes (ABS) eingesetzt werden, wie sie bei vielen modernen Kraftfahrzeugen vorhanden sind. Dadurch werden die Mehrkosten für die Ausführung der vorliegenden Erfindung gering gehalten.

Alternativ können andere Drehzahlen des Antriebsstrangs, so zum Beispiel die Drehzahl n_ge der Antriebswelle 8 erfaßt werden und in der gleichen Weise wie nachfolgend beispielhaft für die Raddrehzahl n_rad beschrieben verarbeitet werden.

In Schritt 21 berechnet die Steuerschaltung die zeitliche Ableitung dn_rad/dt der Raddrehzahl n_rad. Wenn diese negativ ist, also auf eine Verlangsamung des Fahrzeugs hinweist, und unterhalb eines Grenzwerts liegt, der von der aktuellen Drehzahl abhängig und in einer Tabelle der Steuerschaltung 11 gespeichert sein kann, setzt die Steuerschaltung in Schritt 22 eine Variable of auf den Wert 1. Wenn die Ableitung oberhalb des Grenzwerts liegt oder gleich diesem ist, wird of gleich Null gesetzt.

In Schritt 23 erfaßt die Steuerschaltung den Schaltzustand des Getriebes 7 und gibt einer Variablen z_sg den Wert Null, wenn sich das Getriebe im Leerlauf-Schaltzustand befindet, beziehungsweise den Wert 1 oder 2, wenn es sich im ersten beziehungsweise zweiten Arbeits-Schaltzustand befindet.

Wenn sich das Getriebe 7 nicht im Leerlauf-Schaltzustand befindet, wird in Schritt 25 der Wert der Variablen of abgefragt. Wenn dieser gleich 1 ist, versetzt die Steuerschaltung 11 mit Hilfe des Aktors 10 das Getriebe 7 in den Leerlauf-Schaltzustand. Dieser Vorgang ist in der Figur bei Schritt 26 durch zwei sich auseinander bewegende Kupplungsscheiben veranschaulicht. Anschließend kehrt das Verfahren zum Ausgangspunkt zurück, und der Zyklus wiederholt sich.

Falls in Schritt 25 festgestellt wird, daß of nicht gleich 1 ist, kehrt das Verfahren direkt zum Ausgangspunkt zurück.

Falls sich in Schritt 24 das Getriebe 7 in dem Leerlauf-Betriebszustand befindet, also z_sg gleich Null ist, verzweigt das Verfahren zu Schritt 27, in dem die Drehzahl n_ge der Antriebswelle 8 gemessen wird. Anschließend wird in Schritt 28 auch die Drehzahl n_sg der Welle der elektrischen Maschine bestimmt. In Schritt 29 vergleicht die Steuerschaltung n_sg mit einem Grenzwert vn_ge, wobei der Proportionalitätsfaktor ν dem Übersetzungsverhältnis des Getriebes 7 im aktuellen Schaltzustand entspricht, also im ersten Arbeits-Schaltzustand zum Beispiel 1/3 beträgt. Der Proportionalitätsfaktor kann auch geringfügig kleiner als das Übersetzungsverhältnis gewählt sein, um ein zu häufiges Umschalten zwischen den Schaltzuständen bei einem länger dauernden Bremsvorgang zu vermeiden.

Wenn der Vergleich in Schritt 29 ergibt, daß n_sg kleiner ist, so bedeutet dies, daß sich die Welle der elektrischen Maschine langsamer dreht, als es der Fall wäre, wenn die elektrische Maschine 9 über das Getriebe 7 fest an die Antriebswelle 8 gekoppelt wäre. Wenn dies der Fall ist und gleichzeitig die Variable of nicht gleich 1 ist, das Fahrzeug also nicht stark abgebremst wird, veranlaßt die Steuerschaltung 11 den Aktor 10, das Getriebe wieder in eine Arbeits-Schaltstellung zu versetzen, was durch zwei sich aufeinander zu bewegende Kupplungsscheiben bei Schritt 30 veranschaulicht ist.

Wenn hingegen der Vergleich in Schritt 29 ergibt, daß in n_sg größer ist, so bedeutet dies, daß sich die Welle der elektrischen Maschine im Verhältnis zur Antriebswelle 8 zu schnell dreht, so daß eine Kopplung der beiden über das Getriebe 7 zu einer Drehmomentübertragung auf die Antriebswelle 8 führen würde, was nicht erwünscht ist, da dies der elektrischen Maschine 9 Energie entzieht und gleichzeitig den Bremsvorgang des Fahrzeugs beeinträchtigt. In diesem Fall kehrt das Verfahren direkt zum Ausgangspunkt zurück und das Getriebe 7 bleibt in der Leerlauf-Schaltstellung.

Das gleiche geschieht, wenn of gleich 1 ist, also die in Schritt 21 bestimmte Verzögerung des Fahrzeugs so stark ist, daß sie ein Aufrechterhalten des Leerlauf-Schaltzustands rechtfertigt.

## Patentansprüche

1. Getriebeaggregat für ein Kraftfahrzeug mit einem Antriebsstrang, der zum Ankoppeln einerseits an eine Brennkraftmaschine (1) und andererseits an Räder (6) des Fahrzeugs vorgesehen ist, einer elektrischen Maschine (9) und einem Getriebe (7), das konstruiert ist zur Drehmomentübertragung von der elektrischen Maschine (9) auf den Antriebsstrang (4,8,5) und umgekehrt, wobei das Getriebe (7) einen Leerlauf-Schaltzustand aufweist, in dem keine Drehmomentübertragung von der elektrischen Maschine (9) zu dem Antriebsstrang (4,8,5) erfolgt und eine Steuerschaltung (11) das Getriebe (7) in Abhängigkeit von einer erfaßten Verzögerung des Kraftfahrzeugs in den Leerlauf-Schaltzustand versetzt.

2. Getriebeaggregat nach Anspruch 1, **dadurch gekennzeichnet, daß** das Getriebe zwei Arbeits-Schaltzustände für die Drehmomentübertragung zur elektrischen Maschine (9) beziehungsweise zum Antreibsstrang (4,8,5) aufweist, die sich in ihrem Übersetzungsverhältnis unterscheiden.

3. Getriebeaggregat nach Anspruch 1, **dadurch gekennzeichnet, daß** die Steuerschaltung (11) zur Erfassung der Verzögerung eine Drehzahl des Antriebsstrangs (4,5,8), vorzugsweise eine Raddrehzahl (n_rad) überwacht.

4. Getriebeaggregat nach Anspruch 1 oder 3, **dadurch gekennzeichnet, daß** die Steuerschaltung (11) zur Erfassung der Verzögerung mit einem ABS-Steuergerät zusammenwirkt.

5. Getriebeaggregat nach einem der Ansprüche 1, 3 oder 4, **dadurch gekennzeichnet, daß** die Steuerschaltung (11) die Drehzahl (n_sg) der elektrischen Maschine (9) überwacht und den Leerlauf-Schaltzustand aufhebt, wenn diese Drehzahl unter einen unteren Grenzwert abfällt.

6. Getriebeaggregat nach Anspruch 5, **dadurch gekennzeichnet, daß** die Steuerschaltung (11) zur Überwachung der Drehzahl (n_sg) der elektrischen Maschine (9) an einen Frequenzumrichter der elektrischen Maschine (9) angeschlossen ist.

7. Getriebeaggregat nach Anspruch 5 oder 6, **dadurch gekennzeichnet, daß** die Steuerschaltung (11) die Drehzahl (n_ge) einer antriebsstrangseitigen Welle des Getriebes (7) ermittelt und den Grenzwert dynamisch proportional zur ermittelten Drehzahl festlegt.

8. Getriebeaggregat nach Anspruch 7, **dadurch gekennzeichnet, daß** der Proportionalitätsfaktor (ν) geringfügig kleiner oder gleich dem Übersetzungsverhältnis des Getriebes bei der Drehmomentübertragung vom Antriebsstrang (4,8,5) auf die elektrische Maschine (9) ist.

9. Verfahren zum Betreiben des Getriebeaggregats nach einem der vorhergehenden Ansprüche, mit den Schritten:
- Überwachen einer Drehzahl (n_rad) des Antriebsstrangs, und
- Umschalten in den Leerlauf-Schaltzustand, wenn eine vorgegebene Abnahme der Drehzahl (n_rad) des Antriebsstrangs erfaßt wird.

10. Verfahren nach Anspruch 9, mit den Schritten:
- Überwachen der Drehzahl (n_sg) der elektrischen Maschine (9) und
- Umschalten in den Arbeits-Schaltzustand, wenn die Drehzahl (n_sg) unter einen Grenzwert abfällt.

11. Verfahren nach Anspruch 9, bei dem die Drehzahl (n_ge) der antriebsstrangseitigen Welle des Getriebes (7) ermittelt und der Grenzwert dynamisch proportional zur ermittelten Drehzahl dieser Welle festgelegt wird.

12. Verfahren nach Anspruch 11, bei dem der Proportionalitätsfaktor (ν) geringfügig kleiner oder gleich dem Übersetzungsverhältnis des Getriebes bei der Drehmomentübertragung vom Antriebsstrang (4,8,5) auf die elektrische Maschine (9) gewählt wird.

## Claims

1. Transmission assembly for a motor vehicle, comprising a drive train, which is intended to be coupled firstly to an internal combustion engine (1) and secondly to wheels (6) of the vehicle, an electrical machine (9) and a transmission (7) which is designed to transmit torque from the electrical machine (9) to the drive train (4, 8, 5) and vice versa, with the transmission (7) having an idling switching state in which no torque is transmitted from the electrical machine (9) to the drive train (4, 8, 5), and a control circuit (11) shifting the transmission (7) to the idling switching state as a function of the detected deceleration of the motor vehicle.

2. Transmission assembly according to Claim 1, **characterized in that** the transmission has two operating switching states for transmitting torque to the electrical machine (9) or to the drive train (4, 8, 5), the said operating switching states having different transmission ratios.

3. Transmission assembly according to Claim 1, **characterized in that** the control circuit (11) monitors a rotation speed of the drive train (4, 5, 8), preferably a wheel rotation speed (n_wheel), in order to detect the deceleration.

4. Transmission assembly according to Claim 1 or 3, **characterized in that** the control circuit (11) interacts with an ABS controller in order to detect the deceleration.

5. Transmission assembly according to one of Claims 1, 3 or 4, **characterized in that** the control circuit (11) monitors the rotation speed (n_sg) of the electrical machine (9) and cancels the idling switching state if this rotation speed falls below a lower limit value.

6. Transmission assembly according to Claim 5, **characterized in that** the control circuit (11) is connected to a frequency converter of the electrical machine (9) in order to monitor the rotation speed (n_sg) of the electrical machine (9).

7. Transmission assembly according to Claim 5 or 6, **characterized in that** the control circuit (11) determines the rotation speed (n_ge) of a drive-train-end shaft of the transmission (7) and defines the limit value in a manner dynamically proportional to the determined rotation speed.

8. Transmission assembly- according to Claim 7, **characterized in that** the proportionality factor (ν) is slightly lower than or equal to the transmission ratio of the transmission when torque is transmitted from the drive train (4, 8, 5) to the electrical machine (9).

9. Method for operating the transmission assembly according to one of the preceding claims, comprising the steps of:
- monitoring a rotation speed (n_wheel) of the drive train, and
- switching over to the idling switching state if a prespecified reduction in the rotation speed (n_wheel) of the drive train is detected.

10. Method according to Claim 9, comprising the steps of:
- monitoring the rotation speed (n_sg) of the electrical machine (9) and
- switching over to the operating switching state if the rotation speed (n_sg) falls below a limit value.

11. Method according to Claim 9, in which the rotation speed (n_ge) of the drive-train-end shaft of the transmission (7) is determined and the limit value is defined in a manner dynamically proportional to the determined rotation speed of this shaft.

12. Method according to Claim 11, in which the proportionality factor (ν) is selected to be slightly lower than or equal to the transmission ratio of the transmission when torque is transmitted from the drive train (4, 8, 5) to the electrical machine (9).

## Revendications

1. Ensemble de transmission pour un véhicule automobile comportant une ligne de transmission destinée à être couplée d'une part à un moteur à combustion interne (1) et d'autre part aux roues (6) du véhicule, une machine électrique (9) et une boîte de vitesses (7), celle-ci étant réalisée pour transmettre le couple de la machine électrique (9) à la ligne de transmission (4, 8, 5) et inversement,
la boîte de vitesses (7) ayant un état de commutation de marche à vide dans lequel il n'y a aucune transmission de couple de la machine électrique (9) vers la ligne de transmission (4, 8, 5) et un circuit de commande (11), qui met la boîte de vitesses (7) dans l'état de commutation de marche à vide en fonction de la décélération détectée du véhicule automobile.

2. Ensemble de transmission selon la revendication 1,
**caractérisé en ce que**
la boîte de vitesses présente deux états de commutation actifs pour la transmission du couple vers la machine électrique (9) ou vers la ligne d'entraînement (4, 8, 5), ces états de commutation ayant des rapports de démultiplication qui se chevauchent.

3. Ensemble de transmission selon la revendication 1,
**caractérisé en ce que**
pour saisir la décélération, le circuit de commande (11) surveille la vitesse de rotation de la ligne de transmission (4, 5, 8), de préférence la vitesse de rotation de roue (n-rad).

4. Ensemble de transmission selon la revendication 1 ou 3,
**caractérisé en ce que**
le circuit de commande (11) coopère avec un appareil de commande du système ABS pour saisir la décélération.

5. Ensemble de transmission selon l'une des revendications 1, 3 ou 4,
**caractérisé en ce que**
le circuit de commande (11) surveille la vitesse de rotation (n-sg) de la machine électrique (9) et neutralise l'état de commutation de marche à vide si la vitesse de rotation descend en dessous d'une valeur limite inférieure.

6. Ensemble de transmission selon la revendication 5,
**caractérisé en ce que**
pour surveiller la vitesse de rotation (n-sg) de la machine électrique (9), le circuit de commande (11) est relié à un convertisseur de fréquence de la machine électrique (9).

7. Ensemble de transmission selon la revendication 5 ou 6,
**caractérisé en ce que**
le circuit de commande (11) détermine la vitesse de rotation (n-ge) d'un arbre côté entraînement de la boîte de vitesses (7) et fixe la valeur limite de manière dynamique, proportionnellement à la vitesse de rotation obtenue.

8. Ensemble de transmission selon la revendication 7,
**caractérisé en ce que**
le coefficient de proportionnalité (ν) est légèrement inférieur ou égal au rapport de démultiplication de la boîte de vitesses pour la transmission du couple entre la ligne de transmission (4, 8, 5) vers la machine électrique (9).

9. Procédé de commande d'un ensemble de transmission selon l'une des revendications précédentes, comprenant les étapes suivantes :
- surveillance de la vitesse de rotation (n-rad) d'alignement de transmission et
- commutation à l'état de commutation de marche à vide si l'on saisit une diminution prédéfinie de la vitesse de rotation (n-rad) de la ligne de transmission.

10. Procédé selon la revendication 9, comprenant les étapes suivantes :
- surveillance de la vitesse de rotation (n-sg) de la machine électrique (9) et
- commutation à l'état de commutation actif si la vitesse de rotation (n-sg) descend en dessous d'une valeur limite.

11. Procédé selon la revendication 9,
selon lequel
on détermine la vitesse de rotation (n-ge) de l'arbre côté ligne de transmission de la boîte de vitesses (7) et on fixe la valeur limite de façon dynamique, proportionnellement à la vitesse de rotation déterminée de cet arbre.

12. Procédé selon la revendication 11,
selon lequel
le coefficient de proportionnalité (ν) est légèrement inférieur ou égal au rapport de démultiplication de la boîte de vitesses lors de la transmission du couple de la ligne d'entraînement (4, 8, 5) à la machine électrique (9).
